# EUROPÄISCHE PATENTSCHRIFT

(11) **EP 1 167 754 B1**
(45) Veröffentlichungstag und Bekanntmachung des Hinweises auf die Patenterteilung: **10.08.2016**
(21) Anmeldenummer: 01115171.9
(22) Anmeldetag: 22.06.2001
(51) Int. Cl.: F03D 1/06, F01D 25/36

(54) **Drehvorrichtung für den Rotor einer Windkraftanlage**
Turning device for the rotor of a wind turbine
Vireur pour le rotor d'une éolienne

(30) Priorität: 28.06.2000 DE 10031473
(43) Veröffentlichungstag der Anmeldung: 02.01.2002
(73) Patentinhaber: GENERAL ELECTRIC COMPANY, Schenectady, NY 12345 (US)
(72) Erfinder: Uphues, Ulrich, 48431 Rheine (DE)
(74) Vertreter: Zimmermann & Partner Patentanwälte mbB

(56) Entgegenhaltungen:
- DE-A1- 19 638 877
- GB-A- 2 266 354
- US-A- 4 960 006
- US-A- 5 035 575
- US-A- 5 741 965

## Beschreibung

Die Erfindung betrifft eine Vorrichtung zum Drehen einer mit einem Rotor verbundenen oder gekoppelten Welle einer Windkraftanlage. Eine derartige Vorrichtung wird insbesondere für die Einzelblattmontage und für die Auswechslung einzelner Blätter des Rotors der Windkraftanlage benötigt.

Bei der Installation einer Windkraftanlage wird der Rotor auf dem Boden liegend vormontiert und danach als eine Einheit mittels eines Krans an der "langsamen" Welle des auf dem Turm befindlichen Maschinengehäuses (Gondel) angebracht. Diese Vorgehensweise hat sich bewährt, setzt jedoch voraus, dass um den Turm der Windkraftanlage herum ausreichend Platz vorhanden ist. Unter beengten Verhältnissen und insbesondere bei Off-Shore-Windkraftanlagen ist diese Art der Montage des Rotors nicht möglich. In solchen Fällen bedient man sich der Einzelblattmontage, bei der zunächst die Nabe an die "langsame" Welle des Maschinengehäuses angebracht und alsdann die einzelnen Rotorblätter an der Nabe befestigt werden. Da die Rotorblattbefestigung entweder unter vertikaler oder horizontaler Ausrichtung des Rotorblattes erfolgt, muss der Rotor nach jeder Blattmontage gedreht werden, um das nächste Rotorblatt anbringen zu können. Die Drehung des Rotors erfolgt dabei mit Hilfe eines speziellen Antriebsaggregats, das zwischen dem Getriebe und dem Generator angeordnet wird und mit der "schnellen" Welle, also mit der Ausgangswelle des Getriebes verbunden wird. Diese Art der Drehung des Rotors ist recht werkzeugintensiv und wegen des Ein- und Ausbaus des Antriebsaggregats auch recht zeitaufwendig. Eine derartige Anlage wird im Buch "Windkraftanlagen" von Erich Hau (1988) erwähnt.

Aus Hau, Erich: Windkraftanlagen, Springer-Verlag Berlin 1988, S. 254, Absatz 2 und GB-A-555 439 sind Rotorstellantriebe für Windkraftanlagen zur langsamen Verdrehung des Rotors bekannt.

Der Erfindung liegt die Aufgabe zu Grunde, eine Vorrichtung zum Drehen einer mit einem Rotor verbundenen oder gekoppelten Welle einer Windkraftanlage zu schaffen, die sich durch einen vereinfachten Aufbau auszeichnet und für die Standardwerkzeuge verwendet werden können.

Zur Lösung dieser Aufgabe wird mit der Erfindung eine Vorrichtung zum Drehen einer mit einem Rotor verbundenen oder gekoppelten Welle einer Windkraftanlage vorgeschlagen, die versehen ist mit den Merkmalen des Anspruchs 1. Verschiedene Ausgestaltungen der Erfindung sind Gegenstand der Unteransprüche.

Als Werkzeug zum Antreiben der mit dem Rotor verbundenen oder gekoppelten Welle einer Windkraftanlage wird erfindungsgemäß ein Werkzeug verwendet, das eine drehend antreibbare Antriebswelle aufweist. Dieses Werkzeug wird mit seinem Gehäuse ortsfest an einem Halteelement angebracht, das seinerseits an einer Komponente der Windkraftanlage mit Ausnahme der Welle und mit der Welle verbundenen Teilen anbringbar ist. Auf der Antriebswelle des Werkzeuges wird ein Ritzel befestigt, das mit einer Zahnscheibe kämmt, die mit der Welle verbindbar ist. Mit dieser konstruktiv recht einfachen und montagefreundlichen Vorrichtung lässt sich nun die Welle und damit der Rotor drehen, und zwar auch dann, wenn der Rotor auf Grund des Fehlens ein oder mehrerer Rotorblätter eine starke Unwucht aufweist.

Bei dem Werkzeug handelt es sich entweder um ein handbetriebenes Werkzeug oder um ein motorisches Werkzeug (beispielsweise Bohrmaschine). Im letztgenannten Fall eignen sich insbesondere motorisch betriebene Schrauber (so genannte Drehmomentschrauber), während als handbetriebene Werkzeuge insbesondere Knarren oder Ratschenschlüssel in Frage kommen. Handbetriebene Werkzeuge sind allerdings lediglich bei Windkraftanlagen mit im Durchmesser kleineren Rotoren einsetzbar.

Die Anbringung des Werkzeugs an dem Halteelement der erfindungsgemäßen Vorrichtung erfolgt zweckmäßigerweise durch in Eingriff miteinander bringbare Verzahnungen am Werkzeuggehäuse und am Halteelement. So weisen die handelsüblichen Schrauber zum Festziehen und Lösen von Schraubenmuttern im Bereich des der Aufnahme der Nuss dienenden Endes der Antriebswelle ein konzentrisches Außenverzahnungsteil auf, das in ein korrespondierendes Innenverzahnungsteil eines Durchgangsloches des Halteelements einsteckbar ist. Auf diese Weise ist das Gehäuse unkompliziert und einfach drehfest am Halteelement gelagert. Auf das an der dem Gehäuse des Werkzeuges abgewandten Seite des Halteelements überstehenden Ende der Antriebswelle lässt sich dann das Ritzel mit der Zahnscheibe kämmend aufsetzen.

Die Sicherung des Ritzels an und die Kupplung des Ritzels mit der Antriebswelle erfolgt in ähnlicher Weise wie es bei einer auf die Antriebswelle aufsteckbaren Nuss der Fall ist.

Besonders vorteilhaft ist es, dass die erfindungsgemäß vorgesehene Zahnscheibe als Bremsscheibe für eine Feststell-Scheibenbremse der Windkraftanlage ausgebildet ist. Windkraftanlagen verfügen über mehrere der Verzögerung der Rotation des Rotors dienenden Bremsvorrichtungen. Sie sind im allgemeinen mit einer Scheibenbremse ausgestattet, die auf der "schnellen" Welle angeordnet ist. Wegen des geringeren Drehmoments der "schnellen" Welle ist es von Vorteil, wenn auch die Zahnscheibe auf der "schnellen" Welle angeordnet ist. Denn dann braucht das Werkzeug nur ein vergleichsweise geringes Drehmoment aufzubringen, um den Rotor auch im Falle einer Unwucht drehen zu können. Aus Gründen der Platzersparnis und der Herstellungskosten ist es nun zweckmäßig, die zumeist vorhandene Bremsscheibe gezahnt und damit als Zahnscheibe auszubilden, um dann diese Zahnscheibe sowohl zum Bremsen des Rotors als auch zum Antreiben des Rotors im Falle der Installation, Montage und Demontage der Rotorblätter verwenden zu können.

Die Zahnscheibe der erfindungsgemäßen Vorrichtung kann eine Schrägverzahnung aufweisen. Ferner können die Zähne im wesentlichen radial von der Zahnscheibe abstehen oder aber auch unter einem spitzen Winkel zur Radialerstreckung verlaufen, wie es bei einem Kegelzahnrad der Fall ist. Schließlich können die Zähne auch axial von der Zahnscheibe abstehen. Die Ausbildung des Ritzels ist korrespondierend zur Ausbildung der Zähne der Zahnscheibe. Im Falle einer Kegel-Zahnscheibe sollte auch das Ritzel kegelförmig ausgebildet sein. Je nach den Platzverhältnissen im Maschinengehäuse kann eine der zuvor genannten Varianten der Zahnscheibe nebst Ritzel eingesetzt werden. Schließlich hängt die spezielle Ausgestaltung von Zahnscheibe und Ritzel auch davon ab, wie das Halteelement und insbesondere das Werkzeug relativ zur Zahnscheibe angeordnet werden kann, was ebenfalls nicht zuletzt auch von den Platzverhältnissen im Maschinengehäuse der Windkraftanlage abhängig ist.

Die erfindungsgemäße Vorrichtung lässt sich, wie vorstehend bereits beschrieben, insbesondere bei der Einzelblattmontage eines Rotors einsetzen. Darüber hinaus kann die erfindungsgemäße Vorrichtung auch im Zusammenhang mit der Auswechslung einzelner Rotorblätter verwendet werden. Hauptaugenmerk bei der Auswechslung einzelner Rotorblätter ist es jedoch, den Rotor festzustellen, also gegen eine ungewollte Drehung zu sichern. Hierzu werden im Stand der Technik Arretierelemente in Form von längsverschiebbaren Arretierbolzen eingesetzt, die in axiale oder radiale Bohrungen der Bremsscheibe eintauchen. Ein gewisser Nachteil dieser Systeme besteht darin, dass sich die Bremsscheibe lediglich in einigen wenigen Drehstellungen feststellen lässt und dass das Einnehmen dieser Drehstellungen mitunter problematisch ist.

Nachdem erfindungsgemäß bereits eine Zahnscheibe auf der Welle vorhanden ist, ist es zweckmäßig, deren Verzahnung nunmehr auch zum Sperren, d.h. zum Feststellen der Zahnscheibe und damit auch zum Feststellen des Rotors zu verwenden. Das Arretierelement weist also zweckmäßigerweise an seinem den Zähnen der Zahnscheibe zugewandten Ende mindestens einen Vorsprung auf, der in der Feststellposition des Arretierelements zwischen zwei Zähne der Zahnscheibe eintaucht. Zweckmäßig ist es, wenn anstelle eines Vorsprungs mehrere Vorsprünge am Arretierelement vorhanden sind, die dann, wie übrigens auch ein einzelner Vorsprung, mit der Zahnscheibe kämmen. Das Arretierelement ist auf die Zähne der Zahnscheibe zu und von diesen weg bewegbar an einem Führungsteil geführt, das an einem Bauteil oder einer Komponente der Windkraftanlage mit Ausnahme der Welle und der Zahnscheibe sowie anderen mit der Welle verbundenen Elementen gelagert ist.

Um das Arretierelement in seiner Arretierungsposition und seiner Freigabeposition gegen ungewollte Bewegungen zu sichern, ist es von Vorteil, wenn das Arretierelement am Führungsteil in diesen beiden Positionen festlegbar ist. Das Verfahren des Arretierelements zwischen den beiden Positionen erfolgt zweckmäßigerweise mit Hilfe einer Handkurbel.

Wie vorstehend beschrieben, lässt ich also die Zahnscheibe auf konstruktiv einfache und montage- sowie bedienerfreundliche Weise mit einer Arretiervorrichtung kombinieren. Unter dem Gesichtspunkt der Herstellungskosten ist es von Vorteil, wenn die Teile der erfindungsgemäßen Vorrichtung zum Drehen des Rotors mit Ausnahme der Zahnscheibe erst im Bedarfsfall montiert werden. Für die Montage des Halteelements eignet sich dann insbesondere das Führungsteil, an dem das Arretierelement geführt ist. Denn auch dieses Führungsteil ist im Bereich der Verzahnung der Zahnscheibe angeordnet; in diesem Bereich muss auch das Werkzeug zum Drehen der Zahnscheibe mittels des Ritzels angeordnet werden. Nicht zuletzt auch aus Platzgründen sollten also sowohl die Arretiervorrichtung als auch die Drehvorrichtung nahe beieinander angeordnet sein.

Nachfolgend wird anhand der Figuren ein Ausführungsbeispiel der Erfindung näher erläutert. Im einzelnen zeigen:
- Fig. 1: in Seitenansicht eine Windkraftanlage zur Verdeutlichung der Position innerhalb des Maschinengehäuses, an der die erfindungsgemäße Drehvorrichtung anzubringen ist,
- Fig. 2: eine Ansicht entlang der Linie II-II der Fig. 1 auf die Feststell-Scheibenbremse mit Umfangszahnung zum wahlweisen Feststellen oder Drehen der Bremsscheibe, wobei in Fig. 2 neben der Feststell-Scheibenbremse die Vorrichtung zur Arretierung der Bremsscheibe dargestellt ist,
- Fig. 3: eine Darstellung ähnlich der gemäß Fig. 2 jedoch mit aufgeschnittener Arretiervorrichtung,
- Fig. 4: einen Schnitt durch die Arretiervorrichtung gemäß IV-IV der Fig. 2,
- Fig. 5: eine Darstellung ähnlich der in Fig. 2 jedoch mit an der Arretiervorrichtung befestigter Vorrichtung zum Drehen der Bremsscheibe und
- Fig. 6: eine Darstellung auf die Bremsscheibe mit Drehvorrichtung gemäß dem Pfeil VI der Fig. 5.

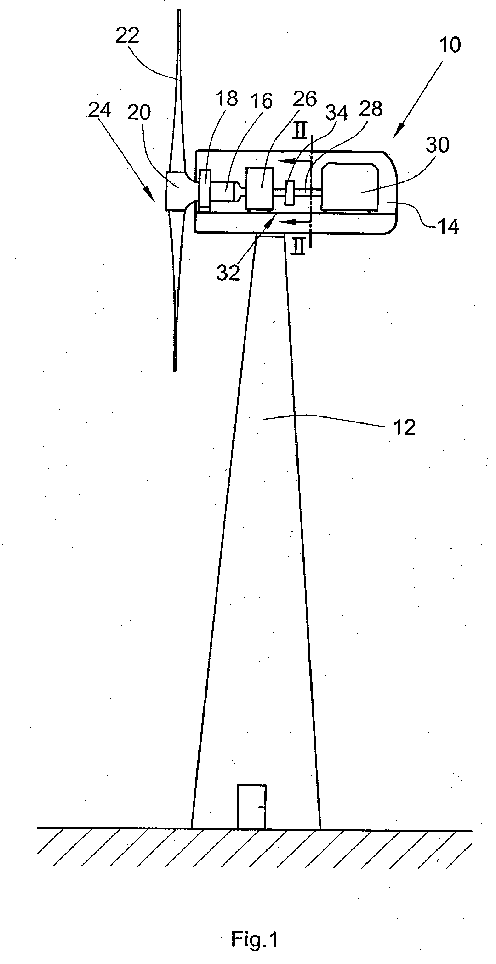

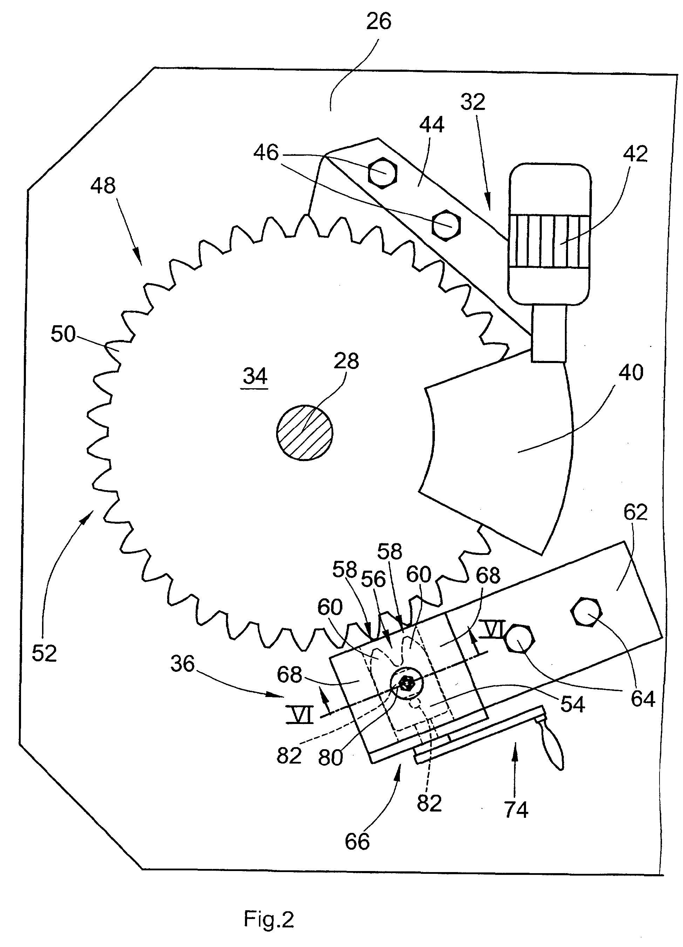

Fig. 1 zeigt in Seitenansicht eine Windkraftanlage 10 mit einigen ihrer wesentlichen Baugruppen. Die Windkraftanlage 10 weist einen Turm 12 auf, auf dem um eine Vertikalachse drehbar gelagert ein Maschinengehäuse 14 (Gondel) angeordnet ist. Innerhalb des Maschinengehäuses 14 ist die so genannte "langsame" Welle 16 über ein Wellenlager 18 drehbar gelagert. An der Welle 16 ist die Nabe 20 eines mehrere Rotorblätter 22 aufweisenden Rotors 24 angebracht. Die "langsame" Welle 16 ist mit einem Getriebe 26 verbunden, das im Maschinengehäuse 14 untergebracht ist. Das Getriebe 26 ist über die so genannte "schnelle" Welle 28 mit einem Generator 30 verbunden. Auf der Welle 28 befindet sich eine Feststell-Scheibenbremse 32 mit einer Bremsscheibe 34. Bei diesem Ausführungsbeispiel der Windkraftanlage 10 ist die Scheibenbremse mit einer Vorrichtung 36 zum Arretieren der Bremsscheibe 34 und mit einer Vorrichtung 38 zum Verdrehen der Bremsscheibe 34 kombiniert. Diese Vorrichtungen werden nachfolgend anhand der Fign. 2 bis 6 erläutert.

In den Fign. 2 bis 4 ist die Vorrichtung 36 zum Arretieren der Bremsscheibe 34 dargestellt. Ferner sind in den Figuren auch einige Einzelheiten der Scheibenbremse 32 zu erkennen. Diese Scheibenbremse 32 weist zwei Bremsbacken 40 auf (in den Figuren ist lediglich eine dieser beiden Bremsbacken zu erkennen), die mittels einer Anpressvorrichtung 42 axial auf die Bremsscheibe 34 zu- und wegbewegbar sind. Diese Komponenten der Scheibenbremse 32 sind an einem Halteelement 44 angebracht, das über die Schrauben 46 an dem Gehäuse des Getriebes 26 befestigt ist.

Die Bremsscheibe 34 ist an ihrem Umfang 48 mit einer Zahnung 50 versehen. Diese Zahnung 50 besteht aus einer Vielzahl von radial abstehenden Zähnen. Insoweit handelt es sich bei der Bremsscheibe 34 um eine Zahnscheibe 52. Mit den Zähnen 50 dieser Zahnscheibe 52 wirkt ein Arretierelement 54 zusammen, das radial auf die Zahnscheibe 52 zu und von dieser weg bewegbar ist. Das Arretierelement 54 weist an seinem der Zahnscheibe 52 gegenüberliegenden Ende 56 zwei Vorsprünge 58 auf, die nach Art von Zähnen 60 ausgebildet sind, welche zwischen die Zähne 50 der Zahnscheibe 52 eintauchen können. In Fig. 2 ist das Arretierelement 54 in gestrichelten Linien und in seiner Freigabeposition dargestellt, in der es außer Eingriff mit der Zahnscheibe 52 steht.

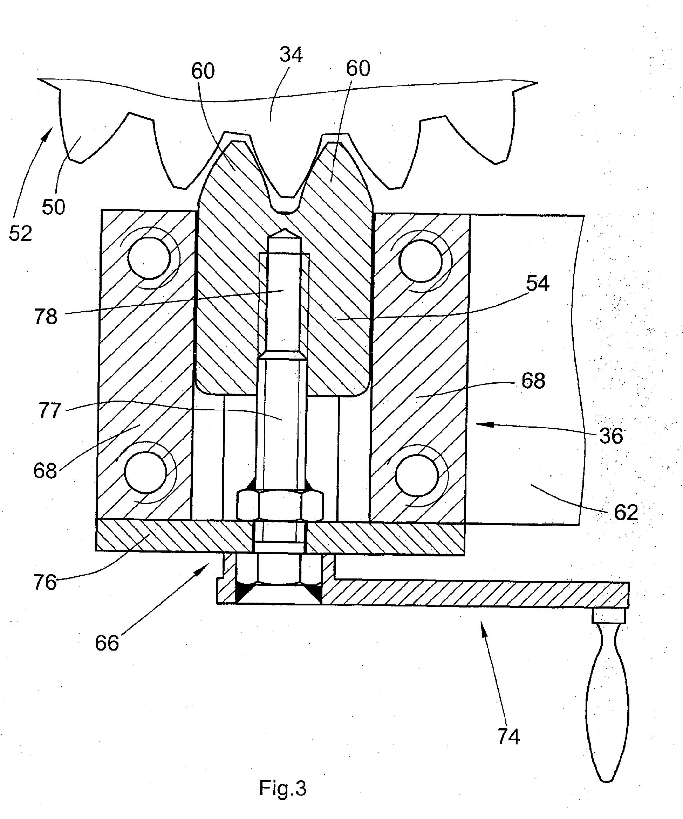

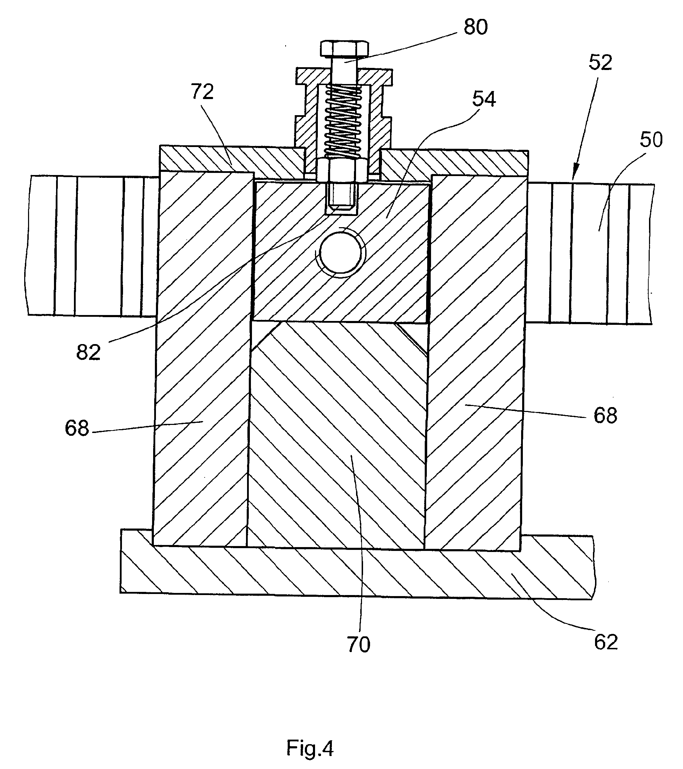

Fig. 3 zeigt die Arretierungsposition des Arretierelements 54, in der seine Zähne 60 zwischen die Zähne 50 der Zahnscheibe 52 eingetaucht sind. Ferner zeigen Fig. 3 und 4 verschiedenen Schnittansichten zur Verdeutlichung des Aufbaus der Arretiervorrichtung 36.

Die Arretiervorrichtung 36 ist mit einem Montageteil 62 versehen, das über die Schrauben 64 an dem Gehäuse des Getriebes 26 befestigt ist. Auf dem Montageteil 62 befindet sich ein Führungsteil 66, das aus zwei Seitenteilen 68 und einem gegenüber diesen beiden Seitenteilen 68 zurückspringenden Mittelteil 70 besteht. Die beiden Seitenteile 68 sind über ein Deckelteil 72 miteinander verbunden. In dem sich zwischen den Teilen 68 bis 72 ergebenden Raum ist das Arretierelement 54 radial zur Zahnscheibe 52 geführt. Die Bewegung des Arretierelements 54 erfolgt mit Hilfe einer Handkurbel 74, die an einer rückwärtigen Platte 76 des Führungsteils 66 drehbar gelagert ist. Mit Hilfe der Handkurbel 74 lässt sich eine mit einem Außengewinde versehene Welle 77 verdrehen, die in Gewindeeingriff mit einer Innengewindebohrung 78 des Arretierelements 54 steht. Durch Drehen der Handkurbel 74 wird demzufolge das Arretierelement 54, das auf Grund seiner rechteckigen Querschnittsform gegen Verdrehungen gesichert im Führungsteil 66 angeordnet ist, vor- und zurückbewegt.

Wie anhand von Fig. 4 zu erkennen ist, lässt sich das Arretierelement 54 mittels eines federbelasteten Feststellbolzens 80 sowohl in seiner Arretierungsposition als auch in seiner Freigabeposition am Führungsteil 66 bzw. an dessen Deckelteil 72 festlegen. Dadurch wird verhindert, dass es durch Erschütterungen zu einer ungewollten Verdrehung der Handkurbel 74 und damit zu einer Bewegung des Arretierelements 54 kommt. Der federbelastete Feststellbolzen 80 greift eine von zwei Aufnahmebohrungen 82 im Arretierelement 54.

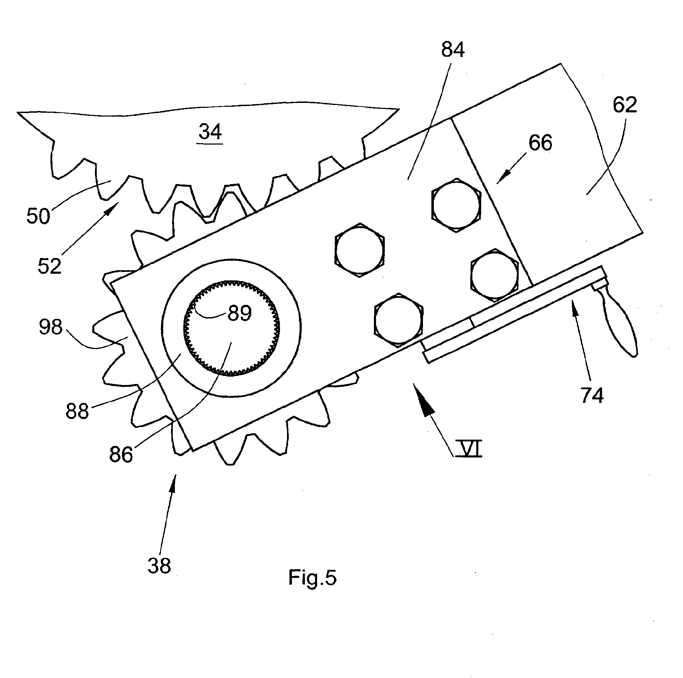

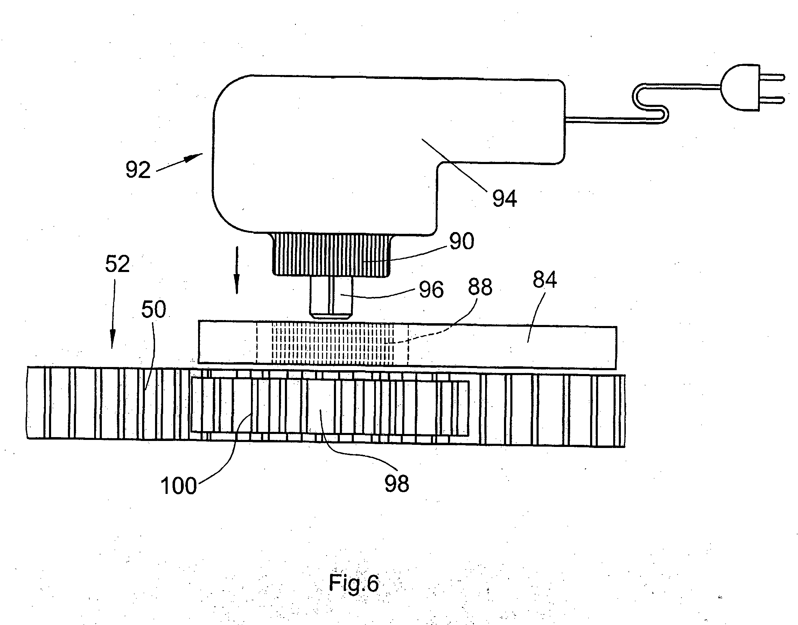

Fig. 5 und 6 zeigen den Anbau der Vorrichtung 38 zum Verdrehen der Brems- bzw. Zahnscheibe 34,52 an dem Führungsteil 66. Zu diesem Zweck wird das Deckelteil 72 mit dem Feststellbolzen 80 vom Führungsteil 66 entfernt und ein plattenförmiges Halteteil 84 mit den Seitenteilen 68 des Führungsteils 66 verschraubt. Dieses Halteteil 84 weist eine radial auswärts der Zahnung 50 der Zahnscheibe 52 angeordnete Durchgangsöffnung 86 mit einem Ring 88 mit Innenverzahnung 89 auf. In die Durchgangsöffnung 86 ist ein Außenverzahnungselement 90 eines elektrisch betriebenen Drehmomentschraubers 92 einsetzbar, mit dessen Gehäuse 94 das Außenverzahnungselement 90 fest verbunden ist. Koaxial zum Außenverzahnungselement 90 verläuft die Antriebswelle 96, deren Kupplungsende in diesem Fall als Außenvierkant ausgebildet ist. Auf die Antriebswelle 96 ist ein Ritzel 98 aufgesteckt, dessen Zähne 100 mit der Verzahnung 50 der Zahnscheibe 52 kämmen. Das Ritzel 98 ist gegen ein unbeabsichtigtes Ablösen von der Antriebswelle 96 auf dieser gelagert. Dies erfolgt beispielsweise durch eine radiale Verschraubung, Verstiftelung, Verbolzung o.dgl.

Bei Betrieb des Drehmomentschraubers 92 dreht sich das Ritzel 98, welches infolge dessen die Bremsscheibe 34 drehend antreibt. Somit lässt sich der mit der Welle 28 über das Getriebe 26 und die Welle 16 gekoppelte Rotor 24 mit Hilfe des Drehmomentschraubers 92 in die für die Montage bzw. Auswechslung der Rotorblätter jeweils erforderliche Stellung verdrehen.

## Patentansprüche

1. Vorrichtung zum Drehen einer mit einem Rotor verbundenen oder gekoppelten Welle einer Windkraftanlage, mit
- einer Zahnscheibe (52), die mit der Welle (28) verbindbar ist,
- einem Halteelement (84), das an einer Komponente der Windkraftanlage mit Ausnahme der Zahnscheibe (52) und der Welle (28) anbringbar ist,
- einem Werkzeug (92) mit einer drehend antreibbaren Antriebswelle (96) und einem Gehäuse (94), das an dem Halteelement (84) ortsfest anbringbar ist, und
- einem Ritzel (98) zum Befestigen an der Antriebswelle (96) des Werkzeuges (92), wobei das Ritzel (98) in seinem an der Antriebswelle (96) des Werkzeuges (92) befestigten Zustand und bei an dem Halteelement (84) angebrachtem Gehäuse (94) des Werkzeuges (92) mit der Zahnscheibe (52) kämmt,
- wobei die Zahnscheibe (52) auch als Bremsscheibe (34) einer Feststell-Scheibenbremse (32) der Windkraftanlage ausgebildet ist, und
- wobei das Werkzeug (95) ein handbetriebenes oder ein motorisches Werkzeug ist.

2. Vorrichtung nach Anspruch 1, **dadurch gekennzeichnet, dass** das Werkzeug (92) ein motorisch betriebener Schrauber ist.

3. Vorrichtung nach Anspruch 1 oder 2, **dadurch gekennzeichnet, dass** das Gehäuse (94) des Werkzeuges (92) ein insbesondere konzentrisch zur Antriebswelle (96) angeordnetes Außenverzahnungsteil (90) aufweist und dass das Halteelement (84) in Innenverzahnungsteil (88) zur kämmenden Aufnahme des Außenverzahnungsteils (90) des Gehäuses (94) des Werkzeuges (92) aufweist.

4. Vorrichtung nach einem der Ansprüche 1 bis 3, **dadurch gekennzeichnet, dass** die Zahnscheibe (52) an einer ein Getriebe (26) und einen Generator (30) verbindenden Welle (28) der Windkraftanlage anbringbar ist.

5. Vorrichtung nach Anspruch 4, **dadurch gekennzeichnet, dass** das Halteelement (84) an dem Gehäuse des Getriebes (26) anbringbar ist.

6. Vorrichtung nach einem der Ansprüche 1 bis 5, **dadurch gekennzeichnet, dass** die Zähne (50) der Zahnscheibe (52) im wesentlichen radial von dieser abstehen.

7. Vorrichtung nach einem der Ansprüche 1 bis 5, **dadurch gekennzeichnet, dass** die Zähne (50) der Zahnscheibe (52) unter einem spitzen Winkel zur Radialerstreckung und insbesondere axial von der Zahnscheibe (52) abstehen.

8. Vorrichtung nach einem der Ansprüche 1 bis 7, **gekennzeichnet durch** ein Arretierelement (54) zum Arretieren der Zahnscheibe (52), wobei das Arretierelement (54) bewegbar an einem Führungsteil (66) angeordnet ist, welches sich an einem Bauteil der Windkraftanlage mit Ausnahme der Zahnscheibe (52) und der Welle (28) befindet, und wobei das Arretierelement (54) ein der Zahnscheibe (52) zugewandtes Ende mit mindestens einem Vorsprung (60) zum Eintauchen zwischen zwei Zähne (50) der Zahnscheibe (52) aufweist.

9. Vorrichtung nach Anspruch 8, **dadurch gekennzeichnet, dass** das Halteelement (84) an dem Führungsteil (66) für das Arretierelement (54) anbringbar ist.

10. Vorrichtung nach Anspruch 8 oder 9, **dadurch gekennzeichnet, dass** der mindestens eine Vorsprung (60) des Arretierelements (54) nach Art eines Zahns zum Kämmen mit der Zahnscheibe (52) ausgebildet ist.

11. Vorrichtung nach einem der Ansprüche 8 bis 10, **dadurch gekennzeichnet, dass** das Arretierelement (54) mindestens zwei nach Art von Zähnen ausgebildete Vorsprünge (60) zum Kämmen mit der Zahnscheibe (52) aufweist.

12. Vorrichtung nach einem der Ansprüche 8 bis 11, **dadurch gekennzeichnet, dass** das Arretierelement (54) in einer Arretierungsposition, in der der mindestens eine Vorsprung (60) zwischen zwei Zähne (50) der Zahnscheibe (52) eingetaucht ist, und einer Freigabeposition gegen unbeabsichtigte Bewegungen festlegbar ist.

13. Vorrichtung nach einem der Ansprüche 8 bis 12, **dadurch gekennzeichnet, dass** das Arretierelement (54) durch Drehen einer Handkurbel (74) verschiebbar ist.

14. Vorrichtung nach einem der Ansprüche 8 bis 13, **dadurch gekennzeichnet, dass** das Arretierelement (54) in dem Führungsteil (66) linear geführt ist.

## Claims

1. Device for rotating a rotor shaft being connected or coupled to a rotor of the wind turbine, having
- a gear disk (52), which is connectable with the rotor shaft (28),
- a holding element (84), which is attachable to a component of the wind turbine except to the gear disk (52) and the rotor shaft (28),
- a tool (92) with a rotationally drivable drive shaft (96) and a housing (94), wherein the tool (92) can be firmly connected to the holding element (84), and
- a pinion (89) for mounting to the drive shaft (96) of the tool (92), wherein the pinion (98) meshes the gear disk (52) when being in a state of being mounted to the drive shaft (96) of the tool (92) and the housing (94) of the tool (92) is attached to the holding element (84),
- wherein the gear disk (52) is configured as brake disc (34) of a disk-holding-break (32) of the wind turbine, and
- wherein the tool (92) is a hand driven tool or a motorized tool.

2. Device according to claim 1, **characterized in that** the tool (92) is a motor driven screwdriver.

3. Device according to claim 1 or 2, **characterized in that** the housing (94) of the tool (92) comprises a portion (90) having an external spline, in particular being arranged concentrically with regards to the drive shaft (96), and that the holding element (84) comprises a portion (88) having an internal spline for accommodating by a meshing the portion (90) having the external spline of the housing (94) of the tool (92).

4. Device according to one of the claims 1 to 3, **characterized in that** the gear disk (52) is attachable to a shaft (28) of the wind turbine connecting a gearbox (26) and a generator (30).

5. Device according to claim 4, **characterized in that** the holding element (84) is attachable to the housing of the gearbox (26).

6. Device according to one of the claims 1 to 5, **characterized in that** the teeth (50) of the gear disk (52) project essentially radially from the gear disk (52).

7. Device according to one of the claims 1 to 5, **characterized in that** the teeth (50) of the gear disk (52) project, in particular axially, from the gear disk (52) while including an acute angle with it.

8. Device according to one of the claims 1 to 7, **characterized by** a locking element (54), wherein the locking element (54) is attached movably to a guiding portion (66), which is located at a component of the wind turbine except to the gear disk (52) and the shaft (22), and wherein the locking element (54) comprises an end being directed towards the gear disk (52) having at least one projection (60) for plunging between two teeth (50) of the gear disk (52).

9. Device according to claim 8, **characterized in that** the holding element (84) is attachable to the guiding portion (66) of the locking element (54).

10. Device according to claim 8 or 9, **characterized in that** the at least one projection (60) of the locking element (54) is embodied in form of a tooth for meshing with the gear disk (52).

11. Devise according to one of the claims 8 to 10, **characterized in that** the locking element (54) comprises at least two projections (60) being embodied in form of a tooth for meshing with the gear disk (52).

12. Device according to one of the claims 8 to 11, **characterized in that** the locking element (54) can be fixed for preventing an undesired motion in a locking position, in which the at least one projection (60) plunges between two teeth (50) of the gear disk (52), and in a release position.

13. Device according to one of the claims 8 to 12, **characterized in that** the locking element (54) can be shifted by rotating a manual crank (74).

14. Device according to one of the claims 8 to 13, **characterized in that** the locking element (54) is linearly guided in the guiding element (66).

## Revendications

1. Dispositif de virage d'un arbre d'éolienne relié ou couplé à un rotor, comprenant
- un disque denté (52) qui est apte à être relié à l'arbre (28),
- un élément de maintien (84) qui est apte à être attaché à un composant de l'éolienne à l'exception du disque denté (52) et de l'arbre (28),
- un outil (92) comprenant un arbre d'entraînement (96) entraînable en rotation et un carter (94) qui est apte à être attaché de manière fixe à l'élément de maintien (84), et
- un pignon (98) destiné à être fixé à l'arbre d'entraînement (96) de l'outil (92), sachant que le pignon (98) s'engrène avec le disque denté (52) dans son état fixé à l'arbre d'entraînement (96) de l'outil (92) et en cas de carter (94) de l'outil (92) attaché à l'élément de maintien (84),
- sachant que le disque denté (52) est aussi constitué comme disque de frein (34) d'un frein à disque d'immobilisation (32) de l'éolienne, et
- sachant que l'outil (95) est un outil à actionnement manuel ou motorisé.

2. Dispositif selon la revendication 1, **caractérisé en ce que** l'outil (92) est une visseuse à actionnement motorisé.

3. Dispositif selon la revendication 1 ou 2, **caractérisé en ce que** le carter (94) de l'outil (92) présente une pièce à denture extérieure (90) disposée en particulier de façon concentrique par rapport à l'arbre d'entraînement (96) et **en ce que** l'élément de maintien (84) présente une pièce à denture intérieure (88) destinée à prendre en engrènement la pièce à denture extérieure (90) du carter (94) de l'outil (92).

4. Dispositif selon l'une des revendications 1 à 3, **caractérisé en ce que** le disque denté (52) est apte à être attaché à un arbre (28) de l'éolienne reliant un engrenage (26) et une génératrice (30).

5. Dispositif selon la revendication 4, **caractérisé en ce que** l'élément de maintien (84) est apte à être attaché au carter de l'engrenage (26).

6. Dispositif selon l'une des revendications 1 à 5, **caractérisé en ce que** les dents (50) du disque denté (52) se dressent sur celui-ci de manière sensiblement radiale.

7. Dispositif selon l'une des revendications 1 à 5, **caractérisé en ce que** les dents (50) du disque denté (52) se dressent sur le disque denté (52) selon un angle aigu par rapport à l'extension radiale et en particulier de manière axiale.

8. Dispositif selon l'une des revendications 1 à 7, **caractérisé par** un élément d'arrêt (54) destiné à arrêter le disque denté (52), sachant que l'élément d'arrêt (54) est disposé de manière mobile au niveau d'une pièce de guidage (66) qui se trouve au niveau d'un composant de l'éolienne à l'exception du disque denté (52) et de l'arbre (28), et sachant que l'élément d'arrêt (54) présente une extrémité tournée vers le disque denté (52) avec au moins une saillie (60) destinée à s'enfoncer entre deux dents (50) du disque denté (52).

9. Dispositif selon la revendication 8, **caractérisé en ce que** l'élément de maintien (84) est apte à être attaché à la pièce de guidage (66) pour l'élément d'arrêt (54).

10. Dispositif selon la revendication 8 ou 9, **caractérisé en ce que** l'au moins une saillie (60) de l'élément d'arrêt (54) est constituée à la façon d'une dent pour l'engrènement avec le disque denté (52).

11. Dispositif selon l'une des revendications 8 à 10, **caractérisé en ce que** l'élément d'arrêt (54) présente au moins deux saillies (60) constituées à la façon de dents pour l'engrènement avec le disque denté (52).

12. Dispositif selon l'une des revendications 8 à 11, **caractérisé en ce que** l'élément d'arrêt (54) est apte à être fixé contre des mouvements non intentionnels dans une position d'arrêt dans laquelle l'au moins une saillie (60) est enfoncée entre deux dents (50) du disque denté (52), et une position de libération.

13. Dispositif selon l'une des revendications 8 à 12, **caractérisé en ce que** l'élément d'arrêt (54) est apte à être déplacé par rotation d'une manivelle (74).

14. Dispositif selon l'une des revendications 8 à 13, **caractérisé en ce que** l'élément d'arrêt (54) est guidé de manière linéaire dans la pièce de guidage (66).
